## Europäisches Patentamt

## European Patent Office

## Office européen des brevets

(19)

(11) Numéro de publication: **0 201 383 B1**

(12) **FASCICULE DE BREVET EUROPEEN**

(45) Date de publication du fascicule du brevet:
**06.12.89**

(51) Int. Cl.⁴: **H01G 1/13**, H01G 1/013

(21) Numéro de dépôt: **86400775.2**

(22) Date de dépôt: **11.04.86**

(54) **Condensateurs de puissance moyenne et haute tension.**

(30) Priorité: **17.04.85 FR 8505929**

(43) Date de publication de la demande:
**17.12.86 Bulletin 86/46**

(45) Mention de la délivrance du brevet:
**06.12.89 Bulletin 89/49**

(84) Etats contractants désignés:
**AT BE CH DE GB IT LI NL SE**

(56) Documents cités:
**EP-A- 0 072 458**
**EP-A- 0 076 693**
**AU-B- 73 484**
**DE-C- 495 269**
**FR-A- 897 458**
**FR-A- 2 225 821**
**US-A- 3 812 407**
**US-A- 4 068 286**

(73) Titulaire: **MERLIN GERIN, Rue Henri Tarze,
F-38050 Grenoble Cédex(FR)**

(72) Inventeur: **Bernard, Patrick, Merlin Gerin,
F-38050 Grenoble Cédex(FR)**
Inventeur: **Theoleyre, Serge, Merlin Gerin,
F-38050 Grenoble Cédex(FR)**
Inventeur: **Masset, Daniel, Merlin Gerin,
F-38050 Grenoble Cédex(FR)**

(74) Mandataire: **Kern, Paul et al, Merlin Gerin Sce.
Brevets 20, rue Henri Tarze, F-38050 Grenoble
Cédex(FR)**

# Description

L'invention est relative à un élément bobiné d'un condensateur de puissance de moyenne ou haute tension, comprenant deux armatures en forme de bandes métalliques et des films diélectriques intercalés entre les bandes métalliques lors de l'enroulement, les deux bandes métalliques étant décalées latéralement pour faire dépasser l'un des bords de l'une des bandes sur l'une des faces frontales de l'élément, le bord opposé étant interne de l'enroulement, et l'un des bords de l'autre bande sur l'autre face frontale de l'élément, le bord opposé étant interne de l'enroulement, les bords dépassant sur la même face frontale étant connectés électriquement pour former une connexion de l'armature.

Les condensateurs de puissance moyenne tension ou haute tension sont réalisés à l'aide de bobinages composés de feuilles ou bandes d'aluminium pour les électrodes ou armatures et d'une ou plusieurs feuilles ou films de diélectrique solide en matière plastique, notamment en polypropylène.

Chacun de ces bobinages forme un élément de condensateur dont la capacité et la tension de service sont limitées par les propriétés des matériaux utilisés et la mise en oeuvre de ces matériaux.

Un condensateur de puissance est constitué d'une association série-parallèle d'éléments de façon à pouvoir supporter la tension de fonctionnement et avoir la capacité requise. Ces éléments sont logés dans une cuve étanche remplie d'un liquide diélectrique.

Du fait de la moyenne ou haute tension, il faut éviter la présence de gaz dans lequel apparaîtraient des décharges partielles qui conduisent à la dégradation de l'isolation et au claquage électrique. Ceci est assuré par une imprégnation sous vide de la partie active du condensateur par un liquide diélectrique.

Les techniques de fabrication ont évolué dans le sens d'une augmentation de la contrainte électrique admissible par le diélectrique solide, et d'une diminution des pertes diélectriques.

Un gradient poussé conduit à une augmentation de la capacité par unité de volume et permet la construction d'appareils ayant une plus grande puissance réactive dans un même volume. Du fait de la diminution des pertes joules, le risque d'échauffement n'est pas un obstacle à la réduction des volumes.

Actuellement, l'utilisation du polypropylène permet d'envisager des gradients électriques très poussés, mais associée au fait que la tension par élément est également augmentée, cela pose des problèmes de tenue diélectrique des liquides. En effet, dans une association liquide, polymère, le liquide est le point fragile de l'isolation. En particulier, près des endroits où le champ électrique est renforcé et où il y a accumulation de liquide, il peut apparaître des décharges partielles dans le liquide, qui vont engendrer la détérioration des films plastiques et le claquage dans le cas de sollicitations exceptionnelles.

La présente invention a pour but de permettre la réalisation d'un condensateur à gradient électrique poussé et à diminution de l'effet de bord des armatures.

Il a déjà été proposé dans le document EP-A 0 072 458 de réduire les effets de bord par un repli de ce bord pour former un ourlet, mais cette solution a l'inconvénient d'introduire une surépaisseur en bord de bobinage, qui engendre une accumulation de liquide entre les feuillets et un risque de détérioration mécanique des films de polymère.

Le document FR-A 2 225 821 décrit un élément de condensateur, formé par un enroulement d'un film diélectrique métallisé, dont une marge est non metallisée. En bordure de la marge l'épaisseur de la couche métallisée est au moins égale à deux fois celle du reste de la surface, et cette forte surépaisseur affecte le facteur de remplissage du bobinage. Les bords tranchants de la surépaisseur provoquent une concentration du champ électrique dans cette zone.

Selon un développement de la présente invention, les films de polypropylène sont rugueux et associés à un diélectrique liquide à haute performance. Entre les deux armatures, sont intercalés un ou plusieurs films de polypropylène rugueux sur une ou deux faces afin d'éviter que les différents films n'adhèrent entre eux, en empêchant ainsi qu'il reste, après imprégnation, des cavités non remplies de liquide. Le diélectrique liquide a un taux d'aromaticité, défini par le rapport du nombre d'atomes de carbone contenus dans des groupes phényl au nombre total d'atomes de carbone, supérieur à 75/100, ce qui assure un seuil d'allumage des décharges partielles et un taux de gassing, propriété d'absorber les gaz, suffisamment élevé. La tenue diélectrique du liquide dans le temps est assuré par l'adjonction d'une quantité suffisante de capteurs de protons type résine époxyde,par exemple, à un taux supérieur à 1.5 mg d'équivalent Hcl/g.Le liquide est un Phenyl - Xylyl - éthane, un Di - ou Monobenzyltoluène ou analogue.

L'emploi d'une bande d'aluminium, dont au moins l'un des bords est découpé par tout moyen assurant une fusion locale du métal, permet de limiter les effets de bord en ayant une surépaisseur inférieure à 15 %. Un tel procédé assure une coupe sans aspérités et avec un rayon de courbure quasi constant. Le seuil d'allumage des décharges partielles est ainsi augmenté d'environ 30 % par rapport à celui obtenu avec des bandes découpées de façon mécanique. La coupe de l'armature est avantageusement réalisé au rayon laser.

La connexion se fait sans l'utilisation de languettes métalliques insérées dans le rouleau, de façon à éviter des déformations du film isolant, une surépaisseur de liquide, et une circulation du courant dans le sens du bobinage. Ces inconvénients sont évités en laissant déborder de côté chacune des armatures sur lesquelles sont directement soudées les connexions. Les pertes Joules dues aux électrodes sont ainsi réduites au minimum et l'intégrité de la partie active du bobinage respectée.

D'autres avantages et caractéristiques ressortiront plus clairement de la description qui va suivre d'un mode de mise en œuvre de l'invention donné à

titre d'exemple non limitatif et représenté aux dessins annexés, dans lesquels :

- la figure 1 est une vue schématique en perspective partiellement arrachée d'un condensateur selon l'invention ;
- la figure 2 est une vue schématique d'un élément bobiné du condensateur selon la figure 1 représenté partiellement déroulé ;
- la figure 3 montre le schéma interne d'un condensateur selon l'invention ;
- la figure 4 est une coupe à échelle agrandie suivant la ligne IV-IV de la figure 2 ;
- la figure 5 est une vue en perspective du bord interne d'une armature.

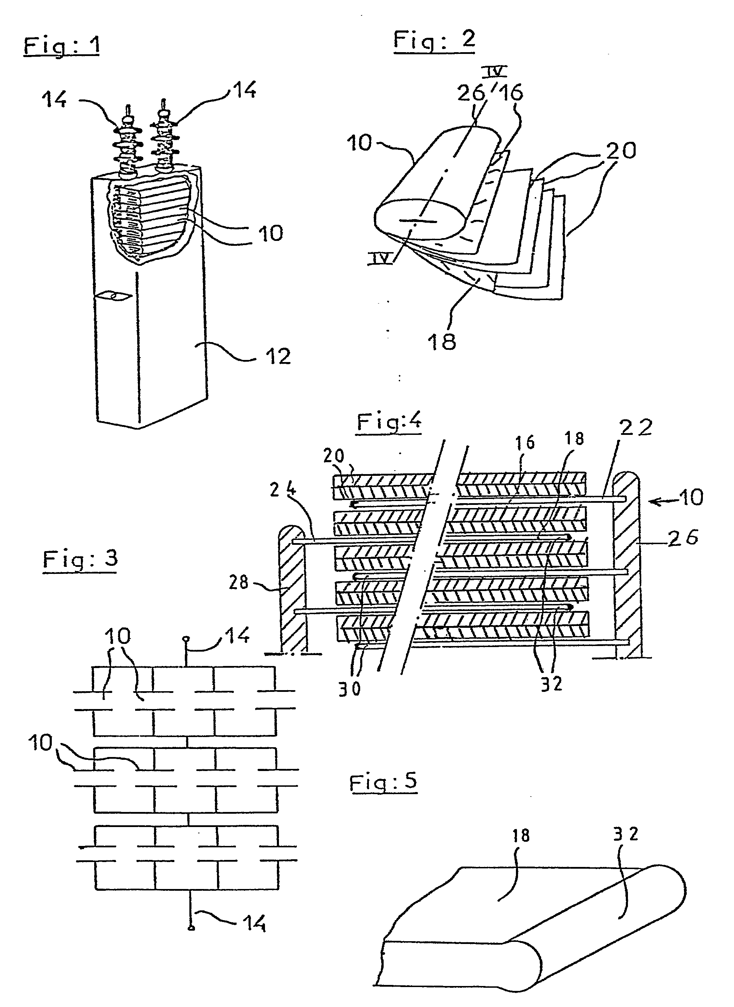

Sur les figures, une pluralité d'éléments de condensateur 10 sont empilés à l'intérieur d'une cuve étanche 12 remplie d'un liquide diélectrique d'imprégnation et portant à sa partie supérieure deux traversées isolantes 14. Chaque élément de condensateur 10 est constitué de deux armatures métalliques 16, 18, en forme de bande enroulée avec interposition d'un film diélectrique constitué, dans l'exemple représenté à la figure 2, par deux bandes en matière synthétique 20, notamment en polypropylène, le film diélectrique pouvant, bien entendu, comprendre une seule bande ou un nombre supérieur de bandes. L'une 16 des armatures est décalée vers le haut sur la figure 2, de manière à faire dépasser son bord 22 de la face frontale de l'enroulement 10. D'une manière symétrique, l'autre 18 des armatures est décalée vers le bas pour faire dépasser son bord 24 de la face frontale opposée de l'élément 10. Les armatures débordantes 22, 24, sont connectées à des barrettes 26, 28, ou sont reliées électriquement par soudure pour assurer une connexion électrique entre les spires de l'enroulement. Le décalage des armatures 16, 18, reporte le bord opposé 30, 32 des armatures 16, 18, à l'intérieur de l'élément bobiné 10. Après enroulement, sur une machine standard, l'élément de condensateur 10 est aplati et muni des connexions électriques. Ces éléments de condensateur 10 sont empilés dans la cuve 12 et connectés électriquement en parallèle et en série, notamment de la manière indiquée à la figure 3, pour répondre aux caractéristiques de tension et de capacité du condensateur. Après mise sous vide et remplissage de la cuve 12 par un liquide diélectrique d'imprégnation, la cuve 12 est scellée. De tels condensateurs sont bien connus des spécialistes et il est inutile de les décrire plus en détails.

Selon la présente invention, les armatures 16, 18, notamment en aluminium, sont découpées du côté de leur bord 30, 32, par un rayon laser, provoquant une fusion partielle du métal et réalisant un bord arrondi représenté à la figure 5. Le bord arrondi 30, 32, présente une faible surépaisseur par rapport à l'épaisseur de l'armature 18, cette surépaisseur étant inférieure à 15 %. Le rayon de courbure du bord arrondi 30, 32, est quasi constant et le bord ne présente aucune aspérité susceptible d'affecter la répartition du champ électrique. La faible surépaisseur permet d'obtenir un meilleur arrondi tout en limitant l'espacement des films diélectriques adjacents 20 et en évitant une augmentation du liquide diélectrique dans cette zône. Les bords arrondis, 30, 32, des armatures 16, 18, permettent une réduction de la contrainte électrique dans ces zônes critiques et combinés à l'emploi d'un liquide diélectrique à tension de claquage élevé, permettent la réalisation d'un condensateur à gradient poussé. A cet effet, le taux d'aromaticité du diélectrique liquide est choisi supérieur à 75/100. Afin de favoriser la pénétration du liquide diélectrique, les films diélectriques 20 présentent sur l'une ou sur les deux faces une rugosité évitant tout collage des films. La rugosité peut également être reportée sur les armatures 16, 18.

Le liquide diélectrique est un Phenyl - Xylyl - Ethane ou de la famille des Dibenzyltoluènes, Mono-benzyltoluènes et analogue. La combinaison selon l'invention d'un tel liquide diélectrique et du bord arrondi assure la maîtrise des décharges partielles et permet la réalisation d'un condensateur tout film à caractéristiques améliorées.

L'invention est nullement limitée au mode de mise en œuvre plus particulièrement décrit.

## Revendications

1. Elément (10) bobiné d'un condensateur de puissance de moyenne ou haute tension, comprenant deux armatures (16, 18), en forme de bandes métalliques et des films diélectriques (20) intercalés entre les bandes métalliques (16, 18) lors de l'enroulement, les deux bandces métalliques étant décalées latéralement pour faire dépasser l'un (22) des bords de l'une (16) des bandes sur l'une des faces frontales de l'élément (10), le bord (30) opposé étant interne de l'enroulement, et l'un (24) des bords de l'autre bande (18) sur l'autre face frontale de l'élément, le bord (32) opposé étant interne de l'enroulement, les bords dépassant sur la même face frontale étant connectés électriquement pour former une connexion de l'armature, caractérisé en ce que lesdits bords opposé (30, 32) internes de l'enroulement (10) présentent un bord arrondi de faible surépaisseur favorisant une bonne répartition du champ électrique et obtenu par une fusion locale du métal.

2. Elément selon la revendication 1, caractérisé en ce que ledit bord (30, 32) arrondi présente un rayon de courbure quasi constant.

3. Elément selon la revendication 1 ou 2, caractérisé en ce que ledit élément (10) bobiné est imprégné par un liquide diélectrique ayant un taux d'aromaticité supérieur à 75/100.

4. Elément selon la revendication 1, 2 ou 3, caractérisé en ce que lesdits films diélectriques (20) sont des films de polypropylène rugeux.

5. Elément selon la revendication 1, 2, 3 ou 4, caractérisé en ce que le bord arrondi (30, 32) de l'armature (16, 18) est obtenu par une découpe de la bande métallique au rayon laser.

6. Elément selon l'une quelconque des revendications précédentes, caractérisé en ce que ladite surépaisseur est inférieure à 15%.

7. Elément selon l'une quelconque des revendications précédentes, caractérisé en ce que ledit élément bobiné (10) est imprégné par du Phenyl-Xylyl-Ethane.

8. Elément selon l'une quelconque des revendications 1 à 7, caractérisé en ce que ledit élément bobiné (10) est imprégné par du Mono- ou Dibenzyltoluène.

## Claims

1. Wound element (10) of a medium or high voltage power capacitor, comprising two electrodes (16, 18), formed by metallic strips, and dielectric films (20) inserted between the metallic strips (16, 18) during winding, the two metallic strips being laterally displaced to make project one (22) of the edges of one (16) of the strips beyond one of the front faces of the element (10), the opposite edge (30) being inside the winding, and one (24) of the edges of the other strip (18) beyond the other front face of the element, the opposite edge (32) being inside the winding, the edges projecting beyond the same front face being connected electrically in order to form an electrode connection, characterized in that said opposite internal edges (30, 32) of the winding (10) comprise a round-off edge of small extra thickness promoting a good distribution of the electric field and obtained by local melting of the metal.

2. Element according to claim 1, characterized in that said round-off edge (30, 32) comprises an almost constant curve radius.

3. Element according to claim 1 or 2, characterized in that said wound element (10) is impregnated by a dielectric liquid of an aromatic percentage higher than 75/100.

4. Element according to claim, 2 or 3, characterized in that said dielectric films (20) are rough polypropylene films.

5. Element according to claim 1, 2, 3 or 4, characterized in that the round-off edge (30, 32) of the electrode (16, 18) is obtained by cutting off the metallic strip by laser beam.

6. Element according to anyone of the preceding claims, characterized in that said extra thickness is lower than 15%.

7. Element according to anyone of the preceding claims, characterized in that said wound element (10) is impregnated by Phenyl-Xylyl-Ethane.

8. Element according to anyone of the claims 1 to 7, characterized in that said wound element (10) is impregnated by Mono- or Dibenzyltoluene.

## Patentansprüche

1. Gewickeltes Teil (10) eines Mittel- oder Hochspannungs-Leistungskondensators, mit zwei Elektroden (16, 18) in Form von Metallstreifen und mit Isolierfilmen (20), die beim Aufwickeln zwischen die Metallstreifen (16, 18) eingefügt werden, wobei die beiden Metallstreifen seitlich verschoben sind, um einen (22) der Ränder von einem (16) der Streifen auf einer der Vorderseiten des Elements (10) hervorragen zu lassen, wobei sich der entgegengesetzte Rand (30) innerhalb der Wicklung befindet, und einen (24) der Ränder des anderen Streifens (18) auf der anderen Vorderseite des Elements hervorragen zu lassen, wobei sich der entgegengesetzte Rand (32) innerhalb der Wicklung befindet, und wobei die auf derselben Vorderseite hervorragenden Ränder elektrisch verbunden sind, um eine Elektrodenverbindung zu bilden, dadurch gekennzeichnet, daß die genannten entgegengesetzten inneren Ränder (30, 32) der Wicklung (10) einen abgerundeten Rand von geringer Überdicke aufweisen, der eine gute Verteilung des elektrischen Feldes begünstigt und durch ein örtliches Schmelzen des Metalls erhalten wird.

2. Teil gemäß Anspruch 1, dadurch gekennzeichnet, daß der genannte abgerundete Rand (30, 32) einen quasi konstanten Krümmungsradius aufweist.

3. Teil gemäß Anspruch 1 oder 2, dadurch gekennzeichnet, daß das genannte gewickelte Teil (10) von einer isolierenden Flüssigkeit imprägniert ist mit einem aromatischen Prozentsatz von mehr als 75/100.

4. Teil gemäß Anspruch 1, 2 oder 3, dadurch gekennzeichnet, daß die genannten Isolierfilme (20) rauhe Polypropylen-Filme sind.

5. Teil gemäß Anspruch 1, 2, 3 oder 4, dadurch gekennzeichnet, daß die abgerundete Kante (30, 32) der Elektrode (16, 18) durch ein Ausschneiden des Metallstreifens mit einem Laserstrahl erhalten wird.

6. Teil gemäß irgendeinem der vorhergehenden Ansprüche, dadurch gekennzeichnet, daß die genannte Überdicke weniger als 15% beträgt.

7. Teil gemäß irgendeinem der vorigen Ansprüche, dadurch gekennzeichnet, daß das genannte gewickelte Teil (10) mit Phenyl-Xylyl-Ethan imprägniert ist.

8. Teil gemäß irgendeinem der Ansprüche 1 bis 7, dadurch gekennzeichnet, daß das genannte gewickelte Teil (10) mit Mono- oder Dibenzyltoluol imprägniert ist.

Fig : 1

Fig : 2

Fig : 4

Fig : 3

Fig : 5